# EUROPÄISCHE PATENTSCHRIFT

(11) **EP 2 876 757 B1**
(45) Veröffentlichungstag und Bekanntmachung des Hinweises auf die Patenterteilung: **15.08.2018**
(21) Anmeldenummer: 14194948.7
(22) Anmeldetag: 26.11.2014
(51) Int. Cl.: H02G 3/12

(54) **Rahmenartiger Montageadapter, Sortiment von rahmenartigen Montageadaptern und Einrichtung mit einem Gerätegehäuse und wenigstens einem rahmenartigen Montageadapter**
Frame-type mounting adapter, assortment of frame-type mounting adapter and device with a housing and at least one frame-type mounting adapter
Adaptateur de montage sous forme de cadre, assortiment d'adaptateurs de montage sous forme de cadre et dispositif doté d'un boîtier d'appareil et d'au moins un adaptateur de montage sous forme de cadre

(30) Priorität: 26.11.2013 DE 202013105376 U
(43) Veröffentlichungstag der Anmeldung: 27.05.2015
(73) Patentinhaber: Wago Verwaltungsgesellschaft mbH, 32423 Minden (DE)
(72) Erfinder: Gräfen, Stefan, DE - 32427 Minden (DE); TÜRKEKÖLE, Muhammet ali,, DE - 32427 Minden (DE)
(74) Vertreter: Gerstein, Hans Joachim

(56) Entgegenhaltungen:
- WO-A1-2006/115495
- US-A- 3 252 611
- US-A- 4 875 880
- US-A1- 2012 026 714
- US-B1- 6 616 005
- US-B1- 8 101 860
- 312: "Bticino Multibox Catalogue 2008-2009", , 31. Dezember 2009 (2009-12-31), XP055189698, Gefunden im Internet: URL:http://www.bticino.be/sites/default/fi les/Documentatie/Catalogi/Schakelmateriaal /NL/Pdf/Multibox.pdf [gefunden am 2015-05-18]

## Beschreibung

Die Erfindung betrifft einen rahmenartigen Montageadapter zur Befestigung eines elektrischen Bauteils gemäß dem Anspruch 1.

Allgemein betrifft die Erfindung das Gebiet der Befestigung elektrischer Bauteile an Gerätegehäusen. Vielfach werden solche elektrischen Bauteile in einer Öffnung einer Gehäusewand des Gerätegehäuses angeordnet, z.B. indem sie von außen durch die Öffnung eingeführt werden und in der Öffnung verrastet werden. Auf diese Weise werden z.B. elektrische Steckverbinder, Schalter, Leuchten oder andere elektrische Bauteile an der Gehäusewand eines Gerätegehäuses befestigt. Damit das elektrische Bauteil sicher an der Gehäusewand befestigt und fixiert ist, muss die Öffnung relativ genau an die äußeren Befestigungsmittel des elektrischen Bauteils angepasst sein, insbesondere in etwa die Außenabmessungen des elektrischen Bauteils aufweisen. Dies erfordert die genaue Einzelanpassung der Öffnung der Gehäusewand an diese Außenabmessungen des elektrischen Bauteils. Dementsprechend ist der Herstellungs- und Bearbeitungsaufwand relativ hoch. Alternativ könnte ein Sortiment von Gerätegehäusen mit einer Vielzahl unterschiedlich dimensionierter Öffnungen bereitgestellt werden, was aber wegen der Lagerhaltung aufwendig wäre.

Aus der US 6,616,005 B1 geht eine modulare Frontplattenanordnung für eine elektrische Box hervor. Aus der WO 2006/115495 A1 geht ein Aufnahmesystem für eine Vielzahl von Schaltkreisen hervor. Aus der US 4,875,880 geht ein modulares Frontplattensystem hervor.

Der Erfindung liegt die Aufgabe zugrunde, die Befestigung eines elektrischen Bauteils in einer Öffnung einer Gehäusewand eines Gerätegehäuses einfacher und universeller zu gestalten.

Diese Aufgabe wird durch einen rahmenartigen Montageadapter gemäß dem Oberbegriff des Anspruchs 1 gelöst, bei dem der Montageadapter an seinen Längsseiten, die länger sind als Schmalseiten des Montageadapters, jeweils Rastmittel zur lösbaren Verrastung des Montageadapters in der Öffnung der Gehäusewand aufweist, wobei die Öffnung in einer Seitenwand des Gerätegehäuses ist und nur ein Montageadapter in der Öffnung befestigbar ist.

Die Erfindung hat den Vorteil, dass die Befestigung von elektrischen Bauteilen an Gehäusewänden von Gerätegehäusen vereinfacht und standardisiert werden kann. Insbesondere können Gerätegehäuse mit standardisierten, vorgefertigten Öffnungen bereitgestellt werden, die ggf. durch Blindkappen verschlossen sind oder bei denen z.B. mittels einer Schwächung des Gehäusematerials bereits herstellerseitig vorgegebene Öffnungen erst noch freigelegt werden müssen. Mit dem erfindungsgemäßen rahmenartigen Montageadapter können im Prinzip beliebige elektrische Bauteile, d.h. Bauteile mit beliebigen Außenkonturen und -größen, in solche vorgegebenen Öffnungen der Gehäusewand eingesetzt werden und darin sicher fixiert werden. Es sind hierfür lediglich entsprechend unterschiedlich ausgebildete Montageadapter bereitzustellen. Die Bereitstellung eines ausreichend großen Sortiments solcher Montageadapter ist mit geringeren Entwicklungs- und Lagerhaltungskosten verbunden als die Bereitstellung entsprechender unterschiedlicher Gerätegehäuse. Durch das Vorsehen von Außenbefestigungsmitteln des Montageadapters, die ein oder mehrere Rastmittel zur lösbaren Verrastung des Montageadapters in der Öffnung der Gehäusewand aufweisen, ist eine schnelle und einfache Befestigung des Montageadapters an dem Gerätegehäuse möglich. Der Montageadapter kann aufgrund der lösbaren Verrastung auch wieder vom Gerätegehäuse entfernt werden und beispielsweise gegen einen anderen Montageadapter mit anderen Abmessungen der Innenöffnung getauscht werden. Auf diese Weise kann auch im Nachhinein in der vorhandenen Öffnung der Gehäusewand ein elektrisches Bauteil mit anderen Außenabmessungen angebracht werden.

Der Montageadapter kann zumindest zum Teil innerhalb der Öffnung der Gehäusewand angeordnet sein und durchdringt damit die Gehäusewand. Auf diese Weise ist der Montageadapter zumindest in einem Teil seiner Erstreckungslänge von dieser Gehäusewand umgeben.

Die Innenöffnung des Montageadapters kann insbesondere eine viereckige rechtwinklige Innenöffnung sein, z.B. mit zwei gegenüber den Schmalseiten der Innenöffnung längeren Seitenkanten. Der Montageadapter kann auch mehrere Innenöffnungen aufweisen, sodass an einem Montageadapter auch mehrere elektrische Bauteile angebracht werden können.

Gemäß einer vorteilhaften Weiterbildung der Erfindung weist der Montageadapter einen die Innenöffnung umgebenden, umlaufenden Kragen auf. Hierdurch erhält der Montageadapter im Bereich der Innenöffnung eine zusätzliche Versteifung. Durch den Kragen kann z.B. die Einstecktiefe des zu befestigenden elektrische Bauteil vergrößert werden. Durch die vergrößerte Einstecktiefe wird das elektrische Bauteil in der Innenöffnung besser gestützt. Durch entsprechende Ausgestaltung des Kragens kann zudem die Einstecktiefe variiert werden und so bestmöglich an das zu befestigende elektrische Bauteil angepasst werden. In einer vorteilhaften Ausgestaltung ist der Kragen an der zum Gehäuseinneren des Gerätegehäuses weisenden Seite des Montageadapters angeordnet. Somit wird das äußere Erscheinungsbild des Gerätegehäuses durch den Kragen nicht beeinflusst.

Gemäß der Erfindung weist der Montageadapter Außenbefestigungsmittel und Rastmittel zur Befestigung des Montageadapters in der Öffnung der Gehäusewand auf, die für ein Einsetzen des Montageadapters in die Öffnung der Gehäusewand vom Innenraum des Gerätegehäuses her eingerichtet sind. Dieses erlaubt eine einfache und ergonomische Art der Anbringung des Montageadapters in der Öffnung der Gehäusewand.

Gemäß einer vorteilhaften Weiterbildung der Erfindung ist der Montageadapter zur mit der Außenoberfläche des Gerätegehäuses fluchtenden oder gegenüber der Außenoberfläche des Gerätegehäuses versenkten Anordnung an der Gehäusewand eingerichtet. Dies hat den Vorteil, dass der Montageadapter nicht von der Gehäusewand nach außen hervorsteht. Ein weiterer Vorteil ist, dass das Erscheinungsbild und das Design des Gerätegehäuses durch einen oder mehrere Montageadapter nicht oder nahezu nicht beeinflusst werden.

Gemäß einer vorteilhaften Weiterbildung der Erfindung steht der Montageadapter im in die Gehäusewand angesetzten Zustand zum Gehäuseinneren hin gegenüber der Gehäusewand hervor. Der Montageadapter kann somit eine größere Einbautiefe aufweisen als die Dicke der Gehäusewand. Insbesondere kann der Montageadapter wenigstens eine sich in das Gehäuseinnere hinein erstreckende Seitenwand aufweisen. Diese ist hilfreich für eine Anbringung des Montageadapters in der Öffnung der Gehäusewand, da der Montageadapter besser mit den Fingern gegriffen werden kann. Die Seitenwand kann z.B. trapezförmig ausgeführt sein. Neben einer Funktion als Handhabungshilfe wirkt die Seitenwand auch versteifend und als Schutz des aufgenommenen elektrischen Bauteils im Gerätegehäuse.

Gemäß einer vorteilhaften Weiterbildung der Erfindung weist der Montageadapter in einer Draufsicht auf die Innenöffnung an seinen vier umlaufenden Umfangsseiten wenigstens ein Rastelement auf. Es kann somit insgesamt nur ein Rastelement vorgesehen sein. Es können auch wenigstens zwei Rastelemente vorgesehen sein, insbesondere wenigstens drei Rastelemente. Im Falle mehrerer Rastelemente können diese Rastelemente an wenigstens zwei oder an wenigstens drei unterschiedlichen umlaufenden Umfangsseiten des Montageadapters angeordnet sein. So können z.B. die Rastelemente derart auf unterschiedliche umlaufende Umfangsseiten verteilt sein, dass an jeder Umfangsseite wenigstens ein Rastelement vorhanden ist. An der vierten Umfangsseite können entweder auch ein oder mehrere Rastelemente vorhanden sein oder wenigstens ein nicht zur Rastbefestigung vorgesehenes Außenbefestigungsmittel, z.B. ein Befestigungsflansch. Die genannte Anordnung der Rastelemente trägt ebenfalls zur guten Handhabung und ergonomischen Befestigbarkeit des Montageadapters bei.

Gemäß einer vorteilhaften Weiterbildung der Erfindung sind eines, mehrere oder alle Rastelemente an Ihrer der Außenseite des Gerätegehäuses zugewandten Seite abgeschrägt. Dies ist ebenfalls förderlich für eine einfache und schnelle Anbringung des Montageadapters in der Öffnung der Gehäusewand von der Innenseite des Gerätegehäuses her.

Gemäß einer vorteilhaften Weiterbildung der Erfindung erstreckt sich die Innenöffnung des Montageadapters bis zu wenigstens einer Schmalseite des Montageadapters. An dieser Schmalseite definiert die Innenöffnung einen Verbindungssteg zwischen den sich gegenüberliegenden Längsseiten des Montageadapters. Hierbei kann der Verbindungssteg bei unterschiedlichen Ausführungsformen des Montageadapters, die unterschiedliche Größen der Innenöffnung aufweisen, stets die gleiche Breite haben. Dies hat den Vorteil, dass bei Anordnung mehrerer Montageadapter in nebeneinander liegenden Öffnungen der Gehäusewand die darin zu befestigenden elektrischen Bauteile jeweils an der gleichen Position beginnen, was für ein akkurates Erscheinungsbild des in dieser Art ausgestatteten Gerätegehäuses förderlich ist.

Der Verbindungssteg kann insbesondere als relativ schmaler Verbindungssteg ausgebildet sein, z.B. mit einer Breite, die ungefähr der Materialdicke des Montageadapters entspricht oder geringfügig größer oder kleiner ist. Hierdurch kann der Montageadapter an der Schmalseite, an der der Verbindungssteg vorhanden ist, mit einer größeren Flexibilität ausgebildet werden, sodass die Flexibilität des Montageadapters an dieser Stelle zur Unterstützung der Funktion eines an dem Verbindungssteg angeordneten Rastmittels dienen kann.

Die eingangs genannte Aufgabe wird außerdem gemäß Anspruch 10 gelöst durch ein Sortiment von rahmenartigen Montageadaptern der zuvor beschriebenen Art, wobei die Montageadapter sich durch unterschiedliche Größen der Innenöffnung unterscheiden und damit zur wahlweisen Aufnahme elektrischer Bauteile mit unterschiedlichen Außenabmessungen in identisch dimensionierten Öffnungen der Gehäusewand des Gerätegehäuses ausgebildet sind. Auch hiermit können die zuvor erwähnten Vorteile der Erfindung realisiert werden.

Gemäß einer vorteilhaften Weiterbildung der Erfindung beginnt die Innenöffnung bei einem Montageadaptern des Sortiments an einer Schmalseite des Montageadapters stets an derselben Position. Dies ist für ein akkurates Erscheinungsbild des mit den Montageadaptern ausgestatteten Gerätegehäuses förderlich.

Gemäß einer vorteilhaften Weiterbildung der Erfindung weist das Sortiment einen als Blindstopfen ausgebildeten Montageadapter auf, der eine Innenöffnung aufweist, die kleiner ist als die Außenabmessungen des kleinsten aufzunehmenden elektrischen Bauteils. So kann die Innenöffnung in diesem Fall z.B. schlitzförmig ausgebildet sein, d.h. als im wesentlichen senkrecht zu den Längsseiten des Montageadapters verlaufender Schlitz. Mit dem Blindstopfen können an dem Gerätegehäuse bereits vorhandene Öffnungen, in die keine elektrischen Bauteile eingesetzt werden sollen, verschlossen werden.

Gemäß einer vorteilhaften Weiterbildung der Erfindung weisen sämtliche Montageadapter des Sortiments die gleichen Außenabmessungen zum Einsetzen in Gehäuseöffnungen mit identischen Maßen auf.

Die eingangs genannte Aufgabe wird außerdem gemäß Anspruch 14 gelöst durch eine Einrichtung mit einem Gerätegehäuse und wenigstens einem rahmenartigen Montageadapter der zuvor beschriebenen Art, wobei das Gerätegehäuse wenigstens eine Gehäusewand aufweist, die wenigstens eine Öffnung zur Aufnahme des Montageadapters hat, in die der Montageadapter lösbar eingerastet ist. Auch hierdurch können die eingangs genannten Vorteile realisiert werden.

Gemäß einer vorteilhaften Weiterbildung der Erfindung hat die Gehäusewand, die die wenigstens eine Öffnung zur Aufnahme des Montageadapters aufweist, mehrere nebeneinander liegende Öffnungen zur Aufnahme weiterer Montageadapter. Auf diese Weise können in der gleichen Art mehrere elektrische Bauteile nebeneinander an der Gehäusewand des Gerätegehäuses befestigt werden. Die nebeneinander liegenden Öffnungen können identische Maße aufweisen.

Gemäß einer vorteilhaften Weiterbildung der Erfindung weist das Gerätegehäuse im Bereich der Öffnung bzw. der Öffnungen im Auslieferungszustand eine oder mehrere ausbrechbare Verschlussplatten auf, die die Öffnung bzw. die Öffnungen der Gehäusewand ganz oder überwiegend verschließen. Hierzu kann die Gehäusewand z.B. mit Sollbruchstellen versehen sein. Auf diese Weise können vom Anwender konfigurierbare Universal-Gerätegehäuse bereitgestellt werden, in denen eine oder mehrere Öffnungen herstellerseitig bereits vordefiniert sind, aber zunächst noch ganz oder überwiegend verschlossen sind. Durch einfaches Herausbrechen von Verschlussplatten kann der Anwender dann eine gewünschte Anzahl von Öffnungen freilegen. Alternativ können Öffnungen auch bereits freigelegt sein und mit Blindstopfen verschlossen werden.

Gemäß einer vorteilhaften Weiterbildung der Erfindung weisen eine, mehrere oder alle Öffnungen der Gehäusewand einen die Öffnung umlaufenden Absatz auf, der eine zur Außenseite des Gehäuses gerichtete Auflagefläche für den jeweiligen Montageadapter bildet. Dies hat den Vorteil, dass der Montageadapter etwas versenkt an der Gehäusewand angebracht werden kann und nicht oder weniger weit nach außen hin hervorsteht.

Gemäß einer vorteilhaften Weiterbildung der Erfindung weist der Montageadapter an den Schmalseiten und/oder an den Längsseiten jeweils eine Auflagekante zur Auflage auf den umlaufenden Absatz der Gehäuseöffnung auf. So kann der Montageadapter z.B. an den Schmalseiten zumindest abschnittsweise mittig und/oder an den Längsseiten z.B. abschnittsweise mittig jeweils eine Auflagekante zur Auflage auf den umlaufenden Absatz der Öffnung der Gehäusewand aufweisen. Die Auflagekante bzw. die Auflagekanten können z.B. durch eines oder mehrere der zuvor beschriebenen Rastelemente gebildet werden.

Die Auflagekante kann auf der der Außenseite des Gerätegehäuses zugewandten Seite abgeschrägt sein. Dies vereinfacht wiederum das Einsetzen des Montageadapters in die Öffnung der Gehäusewand. Die abgeschrägte Auflagekante wirkt dabei als Einführschräge. Die Schräge kann z.B. durch Anfasen der Auflagekante gebildet sein.

Der Montageadapter kann an seinen Längsseiten zumindest abschnittsweise außerhalb der Auflagekante seitliche Stege bzw. Stegabschnitte aufweisen. In Einsteckrichtung des elektrischen Bauteils in die Innenöffnung sind die seitlichen Stege mit Abstand zur Auflagekante an der Seitenwandung angeordnet.

Auf diese Weise kann der Montageadapter durch eine Schwenkbewegung in die Öffnung der Gehäusewand eingerastet werden. Die an den Längsseiten des Montageadapters angeordneten Auflagenkanten bewirken, dass die Gehäusewand des Gerätegehäuses mit dem Absatz zumindest bereichsweise elastisch nachgibt, sodass der Absatz, nachdem die Auflagekante vorbeigeschwenkt ist, hinter dieser zurückschnappt. An der Schmalseite des Montageadapters weicht dagegen diese Schmalseite, bedingt durch den aufgrund der Innenöffnung dünnen Verbindungssteg, elastisch aus und schnappt nach dem Einschwenken des Montageadapters in die Öffnung der Gehäusewand hinter den Absatz.

Durch die seitlichen Stege ist eine formschlüssige Aufnahme des Montageadapters in der Öffnung der Gehäusewand gegeben, da der Absatz an der Öffnung der Gehäusewand zwischen der Auflagekante und den seitlichen Stegen aufgenommen ist.

Das bereits erwähnte Gerätegehäuse kann insbesondere ein Elektrogerätegehäuse sein, d.h. ein Gehäuse eines Elektrogeräts. In dem Gehäuse kann damit eine elektrische und/ oder elektronische Baugruppe und/oder einzelne elektrische und/oder elektronische Komponenten angeordnet werden. Das elektrische Bauteil kann z.B. ein Steckverbinder, ein Schalter oder eine Leuchte sein, das in der Innenöffnung des Montageadapters befestigt ist. Das elektrische Bauteil kann ein oder mehrere Rastmittel aufweisen, mit dem bzw. mit denen das elektrische Bauteil lösbar am Montageadapter eingerastet ist. Dies erlaubt eine einfache und schnelle Befestigung des elektrischen Bauteils am Montageadapter und ggf. die Möglichkeit, das elektrische Bauteil wieder vom Montageadapter zu lösen.

Die Erfindung wird nachfolgend anhand von Ausführungsbeispielen unter Verwendung von Zeichnungen näher erläutert.

Es zeigen:
- Figur 1: ein Gerätegehäuse und ein Montageadapter in isometrischer Darstellung und
- Figur 2: ein Sortiment von Montageadaptern in Frontansicht und
- Figur 3: einen Ausschnitt des Gerätgehäuses in Frontansicht und
- Figur 4: eine Schnittdarstellung des Gerätegehäuses entsprechend dem Schnitt B-B der Figur 3 und
- Figur 5: einen Schnitt durch das Gerätegehäuse entsprechend dem Schnitt C-C der Figur 6 und
- Figur 6: einen Schnitt A-A gemäß Figur 3 und
- Figur 7: eine Detailansicht D gemäß Figur 4 und
- Figur 8: eine Detailansicht F gemäß Figur 6 und
- Figur 9: eine Schnittdarstellung eines Teils des Gerätegehäuses entsprechend dem Schnitt B-B mit eingesetztem elektrischen Bauteil im Montageadapter und
- Figur 10: ein weiteres Sortiment von Montageadaptern in Frontansicht.

In den Figuren werden gleiche Bezugszeichen für einander entsprechende Elemente verwendet.

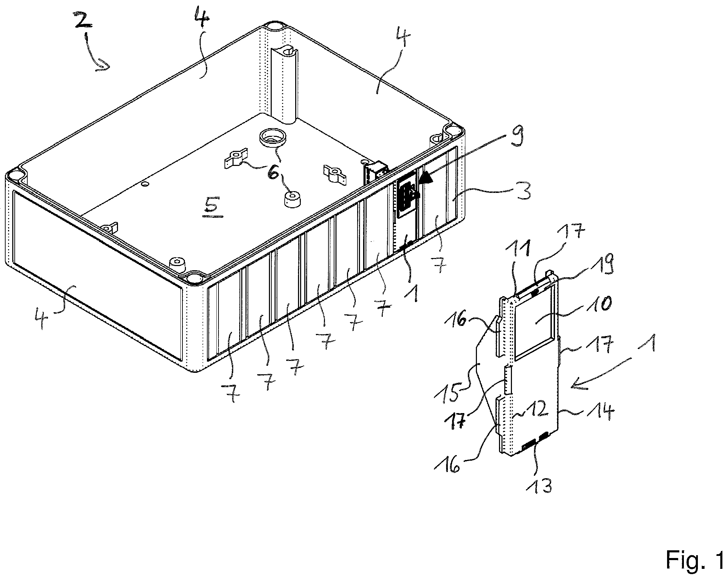

In der Figur 1 ist ein Gerätegehäuse 2 in teilweise geöffnetem Zustand dargestellt. Erkennbar ist ein Unterteil des Gerätegehäuses 2 mit Seitenwänden 3, 4 und einer Bodenplatte 5. Das Gerätegehäuse weist noch eine Deckelplatte auf, die das Gerätegehäuse von oben her abschließt. Die Deckelplatte ist nicht mit dargestellt. An der Bodenplatte 5 des Gerätegehäuses 2 sind eine Vielzahl von Arretier- und Befestigungsmitteln für elektrische und/oder elektronische Komponenten und Baugruppen vorhanden. Im Unterschied zu den Gehäusewänden 4 ist die Gehäusewand 3 als frontseitige Gehäusewand mit einer Vielzahl von Aufnahmeplätzen zur Anordnung elektrischer Bauteile in der Gehäusewand 3 vorbereitet. Die Aufnahmeplätze weisen im Auslieferungszustand des Gerätegehäuses 2 ausbrechbare Verschlussplatten 7 auf. Die Figur 1 zeigt beispielhaft, dass an einem Aufnahmeplatz bereits die Verschlussplatte 7 entfernt ist und stattdessen ein Montageadapter 1 mit einem daran befestigten elektrischen Bauteil 9, z.B. einem Steckverbinder, an der nach Entfernen der Verschlussplatte freiliegenden Öffnung in der Gehäusewand 3 befestigt ist. Auf die gleiche Weise können auch die anderen Verschlussplatten 7 nach Bedarf entfernt werden und in die dann entstehenden Öffnungen der Gehäusewand 3 entsprechende Montageadapter 1 sowie daran zu befestigende elektrische Bauteile angeordnet werden.

Ein in Figur 1 zusätzlich separat dargestellter, im Vergleich zum Gerätegehäuse 2 in vergrößertem Maßstab wiedergegebener Montageadapter 1 weist eine Innenöffnung 10 auf, die zur Aufnahme eines elektrischen Bauteils, insbesondere durch Rastbefestigung, ausgebildet ist. Der Montageadapter 1 weist in Draufsicht, d.h. in einer Ansicht in Richtung der Gehäusewand 3, wenn der Montageadapter daran befestigt ist, eine im wesentlichen rechteckige Außenkontur auf, mit zwei vertikal verlaufenden Längsseiten 12, 14 und zwei horizontal verlaufenden Schmalseiten 11, 13. Die Schmalseiten 11, 13 bilden zusammen mit den Längsseiten 12, 14 vier umlaufende Umfangsseiten des Montageadapters 1.

Jeweils etwa mittig an den Längsseiten 12, 14 und an der oberen Schmalseite 11 befinden sich Rastmittel 17, z.B. in Form von länglichen Rastnasen, die zur Verrastung des Montageadapters 1 in der nach Entfernen einer Verschlussplatte 7 freigegebenen Öffnung der Gehäusewand 3 vorgesehen sind. An den Längsseiten 12, 14 weist der Montageadapter außerdem jeweils oberhalb und unterhalb der jeweiligen Rastmittel 17 hervorstehende Auflagekanten 16 auf.

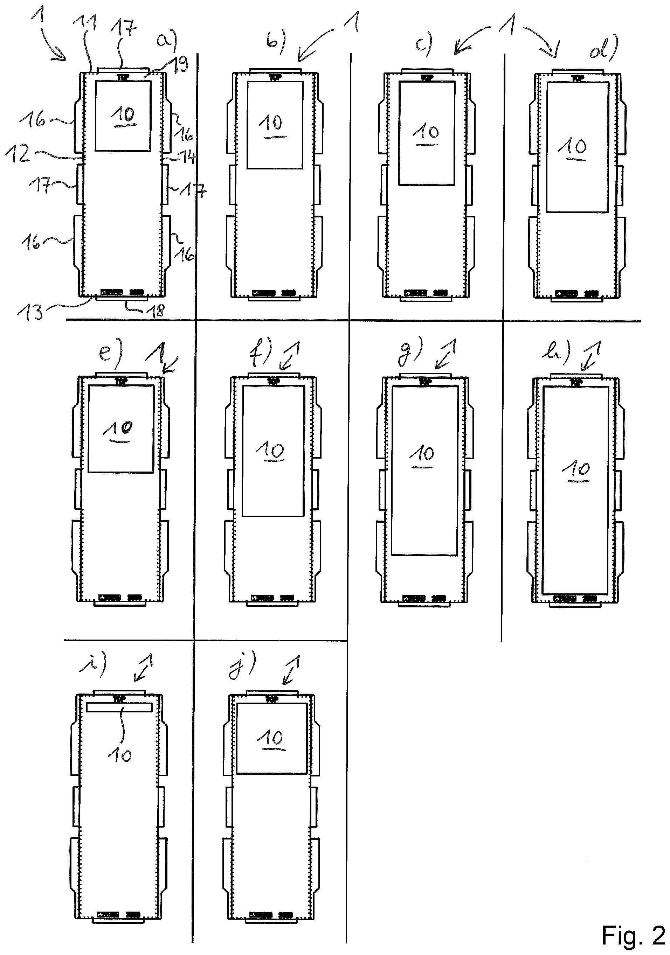

Die Figur 2 zeigt ein Sortiment mit zehn unterschiedlichen ausgebildeten Montageadaptern 1. Der Montageadapter 1 gemäß Ausführung a) entspricht der anhand der Figur 1 bereits erläuterten Ausführungsform. In Ergänzung zu den anhand der Figur 1 bereits erläuterten Merkmalen des Montageadapters 1 zeigt die Figur 2 noch an der unteren Schmalseite 13 ein Außenbefestigungsmittel 18 in Form einer Auflagefläche bzw. eines Flanschs, der ebenfalls zur Befestigung des Montageadapters 1 in der Öffnung der Gehäusewand 3 dient.

An der oberen Schmalseite 11 verbleibt aufgrund der Innenöffnung 10 nur ein relativ schmaler Verbindungssteg 19 an dem Montageadapter 1, der verhältnismäßig flexibel ist und damit das an der oberen Schmalseite 11 vorhandene Rastmittel 17 beim Befestigen in der Öffnung der Gehäusewand 3 nachgeben lässt.

Die übrigen Ausführungsformen des Montageadapters beim Sortiment gemäß Figur 2 weisen gleiche Außenmaße und- konturen auf und unterscheiden sich nur durch die Größe der Innenöffnung, die hinsichtlich ihrer vertikalen und horizontalen Abmessungen variieren kann. Erkennbar ist, dass nicht nur die Höhe der Innenöffnung 10 variieren kann, sondern auch deren Breite. Die Ausführungsform i) zeigt einen als Blindstopfen ausgebildeten Montageadapter 1, dessen Innenöffnung 10 zu klein für die Aufnahme eines elektrischen Bauteils ist, und der nur zur Abdeckung von Öffnungen in der Gehäusewand 3 dient, bei denen die Verschlussplatte 7 bereits entfernt wurde. Es ist dennoch eine schmale, schlitzartige Innenöffnung 10 beim Blindstopfen vorgesehen, um die Nachgiebigkeit des Rastmittels 17 an der oberen Schmalseite 11 zu gewährleisten.

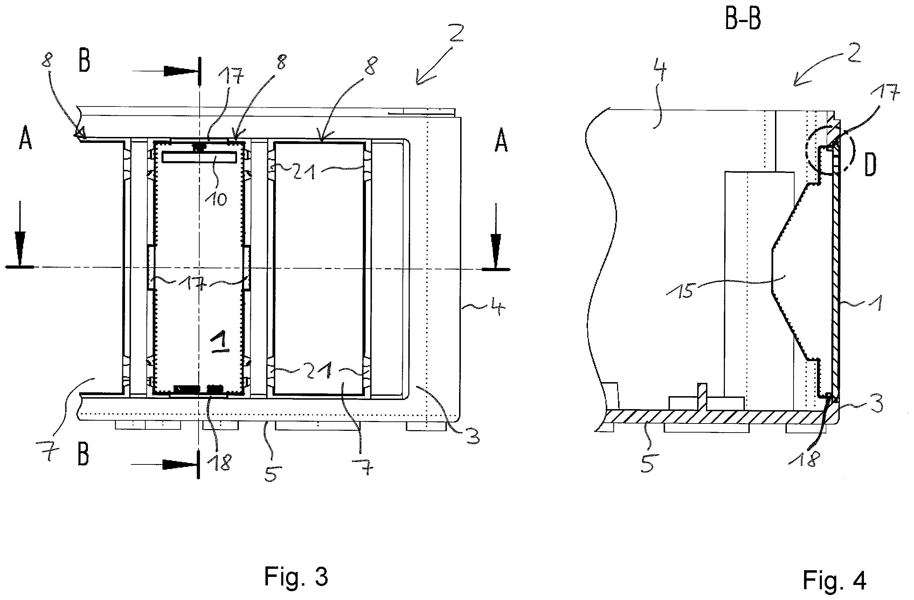

Die Figur 3 zeigt in einer Draufsicht auf die Gehäuseseite 3, d.h. die Frontseite des Gerätegehäuses 2, die drei am weitesten rechts angeordneten Aufnahmeplätze, von denen zwei Aufnahmeplätze noch mit einer Verschlussplatte 7 verschlossen sind. Die Verschlussplatte 7 ist jedoch leicht herausbrechbar und nur über schmale Stege 21 mit der Gehäusewand 3 verbunden. Durch Herausbrechen einer Verschlussplatte 7 wird eine Öffnung 8 der Gehäusewand 3 freigegeben.

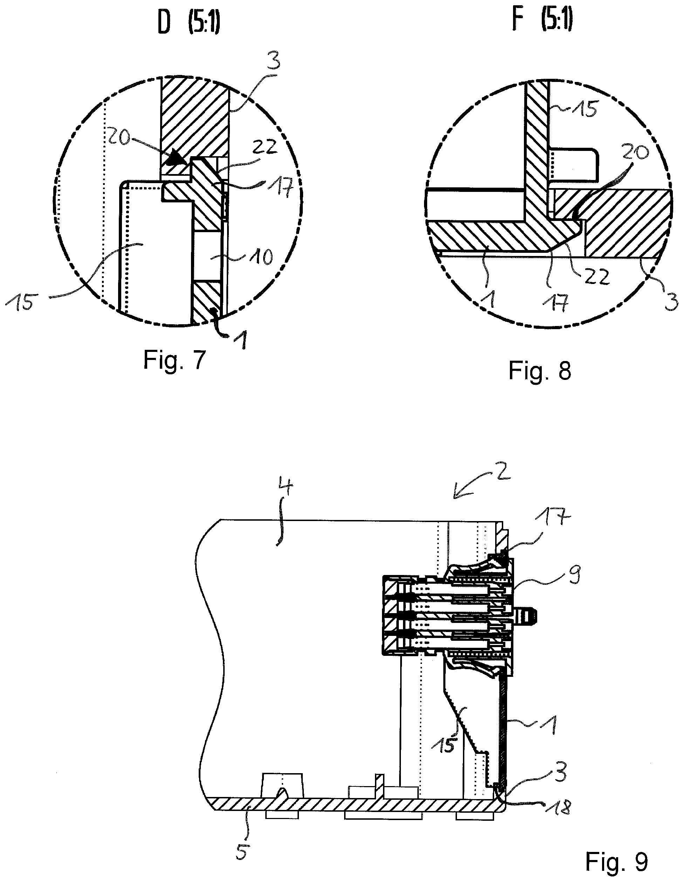

Die Figur 4 lässt insbesondere die in etwa trapezförmige Form einer Seitenwand 15 des Montageadapters 1 gut erkennen. Eine Detailansicht D der Verbindungsstelle zwischen dem Montageadapter 1 und der Gehäusewand 3 wird nachfolgend noch anhand der Figur 7 näher erläutert.

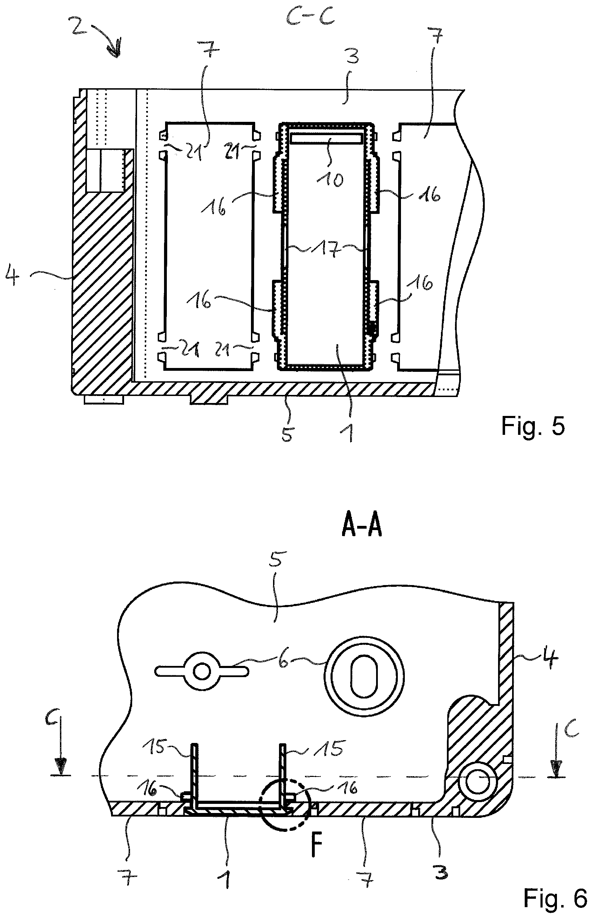

Die Figur 5 zeigt wie erwähnt die Schnittdarstellung C-C, d.h. eine Ansicht auf die in Figur 3 wiedergegebenen drei Aufnahmeplätze von der Innenseite des Gerätegehäuses 2 her.

Die Figur 6 zeigt die Schnittansicht A-A sowie die Lage der Schnittebene C-C. Eine Detailansicht F wird nachfolgend noch anhand der Figur 8 erläutert.

Die vergrößerten Detailansichten D gemäß Figur 7 und F gemäß Figur 8 zeigen insbesondere, dass die Gehäusewand 3 einen Absatz 20 aufweist, der als umlaufender Absatz die gesamte Öffnung 8 umgeben kann. Dies erlaubt es, den Montageadapter 1 sozusagen versenkt in der Gehäusewand 3 anzuordnen, sodass dieser nicht nach außen hervorsteht. Erkennbar ist in der Figur 8 ferner, dass das Rastmittel 17 zur Außenseite des Gerätegehäuses 2 hin eine Fase 22 aufweist, d.h. dort abgeschrägt ist. Dies vereinfacht das Einsetzen des Montageadapters 1 von der Innenseite des Gerätegehäuses 2 her in die Öffnung 8.

Die Figur 9 zeigt in einer vergleichbaren Ansicht wie die Figur 3 die Befestigung des elektrischen Bauteils 9 in den Montageadapter 1, der seinerseits in die Öffnung 8 der Gehäusewand 3 eingesetzt ist.

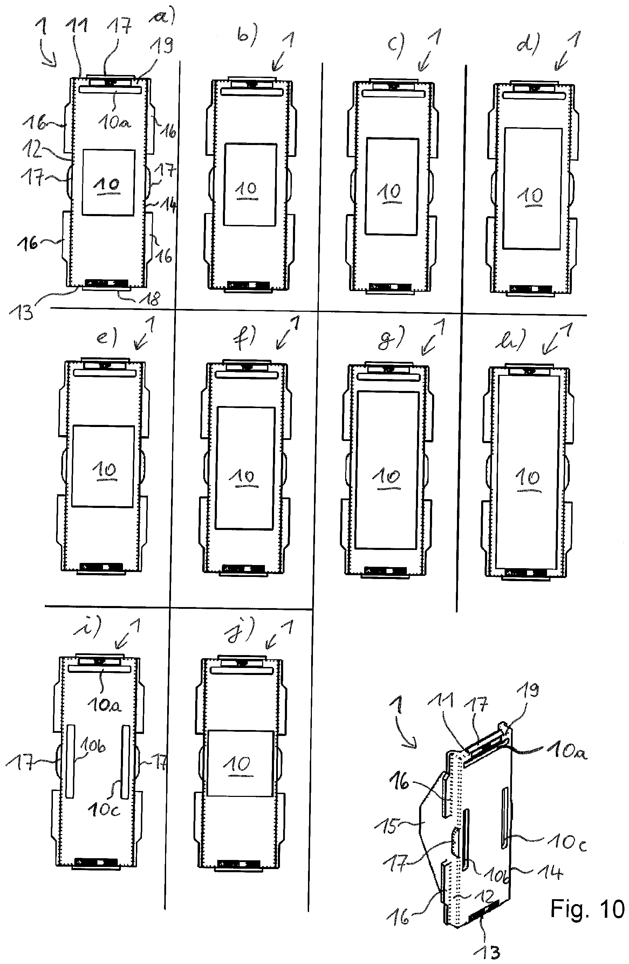

Die Figur 10 zeigt eine weitere Ausführungsform eines Sortiments mit zehn unterschiedlichen Montageadaptern 1 in einer mit der Figur 2 vergleichbaren Darstellung. Im Unterschied zum Sortiment gemäß Figur 2 weisen die Montageadapter gemäß Figur 10, bis auf den Blindstopfen gemäß Figur 10 i), jeweils eine Innenöffnung 10 zur Aufnahme eines elektrischen Bauteils 9 auf, die zumindest bezüglich der vertikalen Erstreckung des Montageadapters 1 immer mittig in diesem angeordnet sind. Die Innenöffnung kann darüber hinaus auch hinsichtlich der horizontalen Erstreckung des Montageadapters mittig angeordnet sein. Um die bereits erläuterte Flexibilität des Stegs 19 und damit die Beweglichkeit des Rastelements 17 an der oberen Umfangsseite 11 zu erhalten, weisen die Montageadapter 1 gemäß Figur 10 jeweils unterhalb der oberen Umfangsseite 11 eine schlitzartige Zusatzöffnung 10a auf. Diese Zusatzöffnung 10a ist bei den Montageadaptern 1 mit Ausnahme der Ausführungsform h) vorhanden, die eine derart große Innenöffnung 10 aufweist, die selbst bereits konstruktiv die ausreichende Flexibilität des Stegs 19 sicherstellt.

Ein in Figur 10 i) erkennbarer Blindstopfen des Sortiments weist zusätzlich zu der Zusatzöffnung 10a noch horizontal verlaufende schlitzartige Zusatzöffnungen 10b, 10c auf, die jeweils im Bereich der seitlichen Rastelemente 17 angeordnet sind. Hierdurch kann vorteilhaft dem Montageadapter in diesem Bereich eine erhöhte Flexibilität gegeben werden, sodass die Rastung über die an den Längsseiten, d.h. den Umfangsseiten 12, 14, angeordneten Rastelemente 17 unterstützt wird, da sich die verbleibenden Stege leicher elastisch verformen können.

Die Figur 10 zeigt rechts unten beispielhaft noch anhand des Blindstopfens i) eine isometrische Ansicht eines Montageadapters 1 gemäß dem Sortiment der Figur 10.

## Patentansprüche

1. Rahmenartiger Montageadapter (1) zur Befestigung eines elektrischen Bauteils (9), das äußere Befestigungsmittel zur Befestigung des elektrischen Bauteils in einer Öffnung (8) einer Gehäusewand (3, 4) eines Gerätegehäuses (2) aufweist, wobei der Montageadapter (1) wenigstens eine an die äußeren Befestigungsmittel des zu befestigenden elektrischen Bauteils (9) angepasste, vom Material des Montageadapters (1) rahmenartig umgebene Innenöffnung (10) aufweist und der Montageadapter (1) Außenbefestigungsmittel (16, 17, 18) aufweist, die an die Aufnahmemaße einer Öffnung (8) in einer Gehäusewand (3, 4) des Gerätegehäuses (2) angepasst sind, wobei die Außenbefestigungsmittel (16, 17, 18) ein oder mehrere Rastmittel (17) zur lösbaren Verrastung des Montageadapters (1) in der Öffnung (8) der Gehäusewand (3) aufweisen, wobei der Montageadapter (1) Außenbefestigungsmittel (16, 17, 18) und Rastmittel (17) zur Befestigung des Montageadapters (1) in der Öffnung (8) der Gehäusewand (3, 4) aufweist, die für ein Einsetzen des Montageadapters (1) in die Öffnung (8) der Gehäusewand (3, 4) vom Innenraum des Gerätegehäuses (2) her eingerichtet sind, **dadurch gekennzeichnet, dass** der Montageadapter (1) an seinen Längsseiten (12, 14), die länger sind als Schmalseiten (11, 13) des Montageadapters, jeweils Rastmittel (17) zur lösbaren Verrastung des Montageadapters (1) in der Öffnung (8) der Gehäusewand (3, 4) aufweist, wobei die Öffnung (8) in einer Seitenwand des Gerätegehäuses (2) ist und nur ein Montageadapter in der Öffnung (8) befestigbar ist.

2. Montageadapter nach Anspruch 1, **dadurch gekennzeichnet, dass** der Montageadapter (1) zur mit der Außenoberfläche des Gerätegehäuses (2) fluchtenden oder gegenüber der Außenoberfläche des Gerätegehäuses (2) versenkten Anordnung an der Gehäusewand (3, 4) eingerichtet ist.

3. Montageadapter nach einem der vorhergehenden Ansprüche, **dadurch gekennzeichnet, dass** der Montageadapter (1) im in die Öffnung (8) der Gehäusewand (3, 4) eingesetzten Zustand zum Gehäuseinneren hin gegenüber der Gehäusewand (3, 4) hervorsteht.

4. Montageadapter nach einem der vorhergehenden Ansprüche, **dadurch gekennzeichnet, dass** der Montageadapter (1) in einer Draufsicht auf die Innenöffnung (10) an seinen vier umlaufenden Umfangsseiten (11, 12, 13, 14) wenigstens ein Rastelement (17) aufweist.

5. Montageadapter nach Anspruch 4, **dadurch gekennzeichnet, dass** eines, mehrere oder alle Rastelemente (17) an Ihrer der Außenseite des Gerätegehäuses (2) zugewandten Seite abgeschrägt sind.

6. Montageadapter nach Anspruch 4 oder 5, **dadurch gekennzeichnet, dass** im Falle mehrerer Rastelemente (17) diese Rastelemente (17) an wenigstens zwei unterschiedlichen umlaufenden Umfangsseiten (11, 12, 13, 14) des Montageadapters (1) angeordnet sind.

7. Montageadapter nach einem der vorhergehenden Ansprüche, **dadurch gekennzeichnet, dass** der Montageadapter (1) an wenigstens einer Umfangsseite (11, 12, 13, 14) ein Befestigungselement (18) zur Befestigung des Montageadapters (1) an der Gehäusewand (3, 4) des Gerätegehäuses (2) aufweist, das nicht als Rastelement ausgebildet ist.

8. Montageadapter nach einem der vorhergehenden Ansprüche, **dadurch gekennzeichnet, dass** die Innenöffnung (10) des Montageadapters (1) sich bis zu wenigstens einer Schmalseite (11, 13) des Montageadapters (1) hin erstreckt und an dieser Schmalseite (11, 13) einen Verbindungssteg (19) zwischen den sich gegenüberliegenden Längsseiten (12, 14) des Montageadapters (1) definiert, wobei der Verbindungssteg (19) bei unterschiedlichen Ausführungsformen des Montageadapters (1), die unterschiedliche Größen der Innenöffnung (10) aufweisen, stets die gleiche Breite hat.

9. Sortiment von rahmenartigen Montageadaptern (1) nach einem der vorhergehenden Ansprüche, wobei die Montageadapter (1) sich durch unterschiedliche Größen der Innenöffnung (10) unterscheiden und damit zur wahlweisen Aufnahme elektrischer Bauteile (9) mit unterschiedlichen Außenabmessungen in identisch dimensionierten Öffnungen (8) der Gehäusewand (3, 4) des Gerätegehäuses (2) ausgebildet sind.

10. Sortiment nach Anspruch 9, **dadurch gekennzeichnet, dass** die Innenöffnung bei allen Montageadaptern (1) des Sortiments an einer Schmalseite (11, 13) des Montageadapters (1) stets an derselben Position beginnt.

11. Sortiment nach einem der Ansprüche 9 bis 10, **dadurch gekennzeichnet, dass** das Sortiment einen als Blindstopfen ausgebildeten Montageadapter (1) aufweist, der eine Innenöffnung (10) aufweist, die kleiner ist als die Außenabmessungen des kleinsten aufzunehmenden elektrischen Bauteils (9).

12. Sortiment nach einem der Ansprüche 9 bis 11, **dadurch gekennzeichnet, dass** sämtliche Montageadapter (1) des Sortiments die gleichen Außenabmessungen zum Einsetzen in Gehäuseöffnungen (8) mit identischen Maßen aufweisen.

13. Einrichtung mit einem Gerätegehäuse (2) und wenigstens einem rahmenartigen Montageadapter (1) nach einem der Ansprüche 1 bis 8, wobei das Gerätegehäuse (2) wenigstens eine Gehäusewand (3, 4) aufweist, die wenigstens eine Öffnung (8) zur Aufnahme des Montageadapters (1) hat, in die der Montageadapter (1) lösbar eingerastet ist.

14. Einrichtung nach Anspruch 13, **dadurch gekennzeichnet, dass** die Gehäusewand (3, 4), die die wenigstens eine Öffnung (8) zur Aufnahme des Montageadapters (1) aufweist, mehrere nebeneinander liegende Öffnungen (8) zur Aufnahme weiterer Montageadapter (1) hat.

15. Einrichtung nach Anspruch 14, **dadurch gekennzeichnet, dass** die nebeneinander liegenden Öffnungen (8) identische Maße aufweisen.

16. Einrichtung nach einem der Ansprüche 13 bis 15, **dadurch gekennzeichnet, dass** das Gerätegehäuse (2) im Bereich der Öffnung (8) bzw. der Öffnungen (8) im Auslieferungszustand eine oder mehrere ausbrechbare Verschlussplatten (7) aufweist, die die Öffnung (8) bzw. die Öffnungen (8) der Gehäusewand (3, 4) ganz oder überwiegend verschließen.

17. Einrichtung nach einem der Ansprüche 13 bis 16, **dadurch gekennzeichnet, dass** eine, mehrere oder alle Öffnungen (8) der Gehäusewand (3, 4) einen die Öffnung (8) umlaufenden Absatz (20) aufweisen, der eine zur Außenseite des Gehäuses (2) gerichtete Auflagefläche für den jeweiligen Montageadapter (1) bildet.

18. Einrichtung nach einem der Ansprüche 13 bis 17, **dadurch gekennzeichnet, dass** der Montageadapter (1) an den Schmalseiten (11, 13) und/oder an den Längsseiten (12, 14) jeweils eine Auflagekante zur Auflage auf den umlaufenden Absatz (20) der Öffnung (8) der Gehäusewand (3) aufweist.

19. Einrichtung nach Anspruch 18, **dadurch gekennzeichnet, dass** die Auflagekante auf der der Außenseite des Gerätegehäuses (2) zugewandten Seite abgeschrägt ist.

20. Einrichtung nach einem der Ansprüche 13 bis 19, **dadurch gekennzeichnet, dass** das Gerätegehäuse (2) ein Elektrogerätegehäuse ist.

21. Einrichtung nach einem der Ansprüche 13 bis 20, **dadurch gekennzeichnet, dass** ein elektrisches Bauteil (9), z. B. ein Steckverbinder, ein Schalter oder eine Leuchte, in der wenigstens einen Innenöffnung (10) des Montageadapters (1) befestigt ist.

22. Einrichtung nach einem der Ansprüche 13 bis 21, **dadurch gekennzeichnet, dass** das elektrische Bauteil (9) ein oder mehrere Rastmittel aufweist, mit dem bzw. mit denen das elektrische Bauteil (9) lösbar am Montageadapter (1) eingerastet ist.

## Claims

1. Frame-like mounting adapter (1) for fastening an electric component (9) which has external fastening means for fastening the electric component in an opening (8) of a housing wall (3, 4) of a device housing (2), wherein the mounting adapter (1) has at least one inner opening (10) which is adapted to the external fastening means of the electric component (9) to be fastened and which is surrounded in a frame-like manner by the material of the mounting adapter (1), and the mounting adapter (1) has outer fastening means (16, 17, 18) which are adapted to the receiving dimensions of an opening (8) in a housing wall (3, 4) of the device housing (2), wherein the outer fastening means (16, 17, 18) have one or more latching means (17) for releasably latching the mounting adapter (1) in the opening (8) of the housing wall (3), wherein the mounting adapter (1) has outer fastening means (16, 17, 18) and latching means (17) for fastening the mounting adapter (1) in the opening (8) of the housing wall (3, 4), which means are designed for inserting the mounting adapter (1) into the opening (8) of the housing wall (3, 4) from the interior of the device housing (2), **characterized in that** the mounting adapter (1) has on its longitudinal sides (12, 14) which are longer than narrow sides (11, 13) of the mounting adapter, respective latching means (17) for releasably latching the mounting adapter (1) in the opening (8) of the housing wall (3, 4), wherein the opening (8) is in a side wall of the device housing (2) and only one mounting adapter can be fastened in the opening (8).

2. Mounting adapter according to Claim 1, **characterized in that** the mounting adapter (1) is designed to be arranged on the housing wall (3, 4) so as to be flush with the outer surface of the device housing (2) or so as to be sunken with respect to the outer surface of the device housing (2).

3. Mounting adapter according to one of the preceding claims, **characterized in that**, in the state in which it is inserted into the opening (8) of the housing wall (3, 4), the mounting adapter (1) projects with respect to the housing wall (3, 4) towards the housing interior.

4. Mounting adapter according to one of the preceding claims, **characterized in that**, as viewed in a plan view of the inner opening (10), the mounting adapter (1) has at least one latching element (17) on its four enclosing peripheral sides (11, 12, 13, 14).

5. Mounting adapter according to Claim 4, **characterized in that** one, a plurality of or all latching elements (17) are bevelled on their side facing the outer side of the device housing (2).

6. Mounting adapter according to Claim 4 or 5, **characterized in that**, in the case of a plurality of latching elements (17), these latching elements (17) are arranged on at least two different enclosing peripheral sides (11, 12, 13, 14) of the mounting adapter (1).

7. Mounting adapter according to one of the preceding claims, **characterized in that** the mounting adapter (1) has on at least one peripheral side (11, 12, 13, 14) a fastening element (18), which is not designed as a latching element, for fastening the mounting adapter (1) to the housing wall (3, 4) of the device housing (2).

8. Mounting adapter according to one of the preceding claims, **characterized in that** the inner opening (10) of the mounting adapter (1) extends as far as at least one narrow side (11, 13) of the mounting adapter (1) and defines at this narrow side (11, 13) a connecting web (19) between the mutually opposite longitudinal sides (12, 14) of the mounting adapter (1), wherein, for different embodiments of the mounting adapter (1) which have different sizes of the inner opening (10), the connecting web (19) always has the same width.

9. Range of frame-like mounting adapters (1) according to one of the preceding claims, wherein the mounting adapters (1) differ through different sizes of the inner opening (10) and are thus designed for selectively receiving electric components (9) having different external dimensions in identically dimensioned openings (8) of the housing wall (3, 4) of the device housing (2).

10. Range according to Claim 9, **characterized in that**, for all mounting adapters (1) of the range, the inner opening always begins at the same position on a narrow side (11, 13) of the mounting adapter (1).

11. Range according to either of Claims 9 and 10, **characterized in that** the range has a mounting adapter (1) which is designed as a blind plug and which has an inner opening (10) which is smaller than the external dimensions of the smallest electric component (9) to be received.

12. Range according to one of Claims 9 to 11, **characterized in that** all the mounting adapters (1) of the range have the same external dimensions for insertion into housing openings (8) having identical dimensions.

13. Arrangement comprising a device housing (2) and at least one frame-like mounting adapter (1) according to one of Claims 1 to 8, wherein the device housing (2) has at least one housing wall (3, 4) which has at least one opening (8) for receiving the mounting adapter (1), into which opening the mounting adapter (1) is releasably latched.

14. Arrangement according to Claim 13, **characterized in that** the housing wall (3, 4) which has the at least one opening (8) for receiving the mounting adapter (1) has a plurality of openings (8) situated next to one another and intended for receiving further mounting adapters (1).

15. Arrangement according to Claim 14, **characterized in that** the openings (8) situated next to one another have identical dimensions.

16. Arrangement according to one of Claims 13 to 15, **characterized in that**, in the delivery state, the device housing (2) has, in the region of the opening (8) or the openings (8), one or more break-out closure plates (7) which completely or predominantly close the opening (8) or the openings (8) of the housing wall (3, 4).

17. Arrangement according to one of Claims 13 to 16, **characterized in that** one, a plurality of or all openings (8) of the housing wall (3, 4) have a shoulder (20) which encloses the opening (8) and which forms a bearing surface for the respective mounting adapter (1) that is directed towards the outer side of the housing (2).

18. Arrangement according to one of Claims 13 to 17, **characterized in that** the mounting adapter (1) has on the narrow sides (11, 13) and/or on the longitudinal sides (12, 14) a respective bearing edge for bearing on the enclosing shoulder (20) of the opening (8) of the housing wall (3).

19. Arrangement according to Claim 18, **characterized in that** the bearing edge is bevelled on the side facing the outer side of the device housing (2).

20. Arrangement according to one of Claims 13 to 19, **characterized in that** the device housing (2) is an electrical device housing.

21. Arrangement according to one of Claims 13 to 20, **characterized in that** an electric component (9), for example a plug connector, a switch or a light, is fastened in the at least one inner opening (10) of the mounting adapter (1).

22. Arrangement according to one of Claims 13 to 21, **characterized in that** the electric component (9) has one or more latching means by which the electric component (9) can be releasably latched on the mounting adapter (1).

## Revendications

1. Adaptateur de montage (1) de type cadre destiné à fixer un composant électrique (9) qui comporte des moyens de fixation extérieurs destinés à fixer le composant électrique dans une ouverture (8) d'une paroi de boîtier (3, 4) d'un boîtier d'appareil (2), l'adaptateur de montage (1) comportant au moins une ouverture intérieure (10), entourée à la manière d'un cadre par la matière de l'adaptateur de montage (1) et adaptée aux moyens de fixation extérieurs du composant électrique (9) à fixer, et l'adaptateur de montage (1) comportant des moyens de fixation extérieurs (16, 17, 18) qui sont adaptés aux dimensions de réception d'une ouverture (8) ménagée dans une paroi de boîtier (3, 4) du boîtier d'appareil (2), les moyens de fixation extérieurs (16, 17, 18) comportant au moins un moyen d'encliquetage (17) destiné à encliqueter de manière amovible l'adaptateur de montage (1) dans l'ouverture (8) de la paroi de boîtier (3), l'adaptateur de montage (1) comportant des moyens de fixation extérieurs (16, 17, 18) et des moyens d'encliquetage (17) destinés à fixer l'adaptateur de montage (1) dans l'ouverture (8) de la paroi de boîtier (3, 4), lesquels moyens sont adaptés pour insérer l'adaptateur de montage (1) dans l'ouverture (8) de la paroi de boîtier (3, 4) depuis l'espace intérieur du boîtier d'appareil (2), **caractérisé en ce que** l'adaptateur de montage (1) comporte sur chacun de ses grands côtés (12, 14), qui sont plus longs que les petits côtés (11, 13) de l'adaptateur de montage, des moyens d'encliquetage (17) destinés à encliqueter de manière amovible l'adaptateur de montage (1) dans l'ouverture (8) de la paroi de boîtier (3, 4), l'ouverture (8) étant ménagée dans une paroi latérale du boîtier d'appareil (2) et un seul adaptateur de montage pouvant être fixé dans l'ouverture (8).

2. Adaptateur de montage selon la revendication 1, **caractérisé en ce que** l'adaptateur de montage (1) est adapté pour être disposé au niveau de la paroi de boîtier (3, 4) de manière à être enfoncé par rapport à la surface extérieure du boîtier d'appareil (2) ou de manière à être à fleur de la surface extérieure du boîtier d'appareil (2).

3. Adaptateur de montage selon l'une des revendications précédentes, **caractérisé en ce que** l'adaptateur de montage (1) fait saillie en direction de l'intérieur du boîtier par rapport à la paroi du boîtier (3, 4) lorsqu'il est inséré dans l'ouverture (8) de la paroi de boîtier (3, 4).

4. Adaptateur de montage selon l'une des revendications précédentes, **caractérisé en ce que** l'adaptateur de montage (1) comporte au moins un élément d'encliquetage (17) dans une vue de dessus de l'ouverture intérieure (10) au niveau de ses quatre côtés périphériques (11, 12, 13, 14).

5. Adaptateur de montage selon la revendication 4, **caractérisé en ce que** l'un, une partie ou la totalité des éléments d'encliquetage (17) sont biseautés au niveau de leur côté tourné vers le côté extérieur du boîtier d'appareil (2).

6. Adaptateur de montage selon la revendication 4 ou 5, **caractérisé en ce que**, dans le cas où il y a une pluralité d'éléments d'encliquetage (17), ces éléments d'encliquetage (17) sont disposés sur au moins deux côtés périphériques différents (11, 12, 13, 14) de l'adaptateur de montage (1).

7. Adaptateur de montage selon l'une des revendications précédentes, **caractérisé en ce que** l'adaptateur de montage (1) comporte sur au moins un côté périphérique (11, 12, 13, 14) un élément de fixation (18) destiné à fixer l'adaptateur de montage (1) sur la paroi de boîtier (3, 4) du boîtier d'appareil (2), lequel élément de fixation n'est pas conçu comme un élément d'encliquetage.

8. Adaptateur de montage selon l'une des revendications précédentes, **caractérisé en ce que** l'ouverture intérieure (10) de l'adaptateur de montage (1) s'étend jusqu'au moins un petit côté (11, 13) de l'adaptateur de montage (1) et définit sur ce petit côté (11, 13) une nervure de liaison (19) entre les grands côtés opposés (12, 14) de l'adaptateur de montage (1), la nervure de liaison (19) ayant toujours la même largeur dans différents modes de réalisation de l'adaptateur de montage (1) qui ont différentes dimensions de l'ouverture intérieure (10).

9. Gamme d'adaptateurs de montage (1) de type cadre selon l'une des revendications précédentes, les adaptateurs de montage (1) se distinguant par des dimensions différentes de l'ouverture intérieure (10) et étant donc conçus pour recevoir sélectivement des composants électriques (9) de différentes dimensions extérieures dans des ouvertures (8) de dimensions identiques de la paroi de boîtier (3, 4) du boîtier d'appareil (2) .

10. Gamme selon la revendication 9, **caractérisée en ce que**, pour tous les adaptateurs de montage (1) de la gamme, l'ouverture intérieure commence toujours à la même position sur un petit côté (11, 13) de l'adaptateur de montage (1).

11. Gamme selon l'une des revendications 9 à 10, **caractérisée en ce que** la gamme comporte un adaptateur de montage (1) qui est conçu sous la forme d'un bouchon d'obturation et qui comporte une ouverture intérieure (10) dont les dimensions sont inférieures aux dimensions extérieures du plus petit composant électrique (9) à recevoir.

12. Gamme selon l'une des revendications 9 à 11, **caractérisée en ce que** tous les adaptateurs de montage (1) de la gamme ont les mêmes dimensions extérieures de manière à être insérés dans des ouvertures de boîtier (8) de dimensions identiques.

13. Dispositif comprenant un boîtier d'appareil (2) et au moins un adaptateur de montage (1) de type cadre selon l'une des revendications 1 à 8, le boîtier d'appareil (2) comprenant au moins une paroi de boîtier (3, 4) qui comporte au moins une ouverture (8) qui est destinée à recevoir l'adaptateur de montage (1) et dans laquelle l'adaptateur de montage (1) est encliqueté de façon amovible.

14. Dispositif selon la revendication 13, **caractérisé en ce que** la paroi de boîtier (3, 4), qui comporte l'au moins une ouverture (8) destinée à recevoir l'adaptateur de montage (1), possède une pluralité d'ouvertures adjacentes (8) destinées à recevoir d'autres adaptateurs de montage (1).

15. Dispositif selon la revendication 14, **caractérisé en ce que** les ouvertures adjacentes (8) ont des dimensions identiques.

16. Dispositif selon l'une des revendications 13 à 15, **caractérisé en ce que** le boîtier d'appareil (2) comporte, dans la région de l'ouverture (8) ou des ouvertures (8), à l'état de livraison, au moins une plaque de fermeture cassable (7) qui ferme complètement ou sensiblement l'ouverture (8) ou les ouvertures (8) de la paroi de boîtier (3, 4).

17. Dispositif selon l'une des revendications 13 à 16, **caractérisé en ce que** l'une, une partie ou la totalité des ouvertures (8) de la paroi de boîtier (3, 4) comportent un épaulement (20) qui s'étend sur la périphérie de l'ouverture (8) et qui forme une surface d'appui dirigée vers le côté extérieur du boîtier (2) et destinée à l'adaptateur de montage respectif (1).

18. Dispositif selon l'une des revendications 13 à 17, **caractérisé en ce que** l'adaptateur de montage (1) comporte sur chacun des petits côtés (11, 13) et/ou des grands côtés (12, 14) un bord d'appui destiné à venir en appui sur l'épaulement périphérique (20) de l'ouverture (8) de la paroi de boîtier (3).

19. Dispositif selon la revendication 18, **caractérisé en ce que** le bord d'appui est biseauté du côté tourné vers le côté extérieur du boîtier d'appareil (2).

20. Dispositif selon l'une des revendications 13 à 19, **caractérisé en ce que** le boîtier d'appareil (2) est un boîtier d'appareil électrique.

21. Dispositif selon l'une des revendications 13 à 20, **caractérisé en ce qu'**un composant électrique (9), par exemple un connecteur enfichable, un commutateur ou une lumière est fixé dans l'au moins une ouverture intérieure (10) de l'adaptateur de montage (1).

22. Dispositif selon l'une des revendications 13 à 21, **caractérisé en ce que** le composant électrique (9) comporte au moins un moyen d'encliquetage permettant d'encliqueter le composant électrique (9) sur l'adaptateur de montage (1) de façon amovible.
